# EUROPÄISCHE PATENTSCHRIFT

(11) **EP 2 101 193 B1**
(45) Veröffentlichungstag und Bekanntmachung des Hinweises auf die Patenterteilung: **30.05.2012**
(21) Anmeldenummer: 08102435.8
(22) Anmeldetag: 10.03.2008
(51) Int. Cl.: G01S 17/93, G01S 5/16, G01S 17/02, G05D 1/02

(54) **Sicherheitssystem zur berührungslosen Messung von Positionen, Wegen und Geschwindigkeiten**
Security system for contactless measurement of positions, paths and speeds
Système de sécurité destiné à la mesure sans contact de positions, de voies et de vitesses

(43) Veröffentlichungstag der Anmeldung: 16.09.2009
(73) Patentinhaber: SICK AG, 79183 Waldkirch (DE)
(72) Erfinder: Wüstefeld, Martin, 79350 Sexau (DE)
(74) Vertreter: Hehl, Ulrich

(56) Entgegenhaltungen:
- WO-A-2004/081598
- US-A- 5 717 792
- US-B1- 6 194 695

## Beschreibung

Die Erfindung betrifft einen Sicherheitssensor sowie ein Verfahren zur berührungslosen Messung von Positionen, Wegen und/oder Geschwindigkeiten nach dem Oberbegriff von Anspruch 1 beziehungsweise 12.

Im Industriebereich müssen Weg und Geschwindigkeit von Fahrzeugen kontrolliert werden, wenn die Sicherheit von Bedienpersonal und Gerät gewährleistet werden soll. Dies gilt für von Bedienpersonal geführte Fahrzeuge, etwa einen Gabelstapler, und erst recht für autonome Fahrzeuge wie Serviceroboter und führerlose Transportsysteme (FTS). Über Wege und Positionen lässt sich festlegen, dass das Fahrzeug zumindest zu gewissen Zeiten bestimmte Bereiche nicht verlässt oder nicht in bestimmte Bereiche eintritt. Eine korrekte Geschwindigkeitsinformation ist dafür nützlich, bei Detektion von Objekten einen Halt in einem angemessenen Weg zu gewährleisten, oder um Unfälle durch auch drastische Begrenzungen der Geschwindigkeit rechtzeitig vor einer möglicherweise kritischen Situation zu vermeiden.

Die Geschwindigkeit kann herkömmlich über Antriebsdaten bestimmt werden, etwa die Motordrehzahl oder die Leistungsaufnahme. Hier besteht schon eine Herausforderung, solche Stellgrößen aus Antriebsdaten mit ausreichender Zuverlässigkeit zu ermitteln, die sich durch Verwendung sicherer Motorfeedbacksysteme oder sicherer Drehgeber nur mit Zusatzaufwand lösen lässt. Die geforderte Zuverlässigkeit verhindert die unmittelbare Verwendung von Standardantrieben.

Selbst wenn aber im Antriebsstrang die Geschwindigkeiten ausreichend zuverlässig erkannt werden, ist der Drehwinkel oder die Winkelgeschwindigkeit eines Antriebs oder einer Achse aus prinzipiellen Gründen kein sicheres Maß für die Position oder die Geschwindigkeit des Fahrzeugs. Ursache hierfür ist ein praktisch nicht kontrollierbarer Schlupf, der nur bei sehr langsamem Fahrzeug und nur unter großem Aufwand berücksichtigt werden kann, und die Abhängigkeit von weiteren Parametern, beispielsweise dem Reifendruck und dem damit variierenden Raddurchmesser. Daraus resultierende Messfehler führen dazu, dass auch mit sicheren Komponenten, wie sicheren Drehgeber, aus prinzipiellen Erwägungen heraus nur begrenzt zuverlässig Wege und Geschwindigkeiten ermittelt werden können. In Summe sind die herkömmlichen Lösungen wegen des Einsatzes und der Anpassung ihrer sicheren Komponenten aufwändig und dennoch ungenau.

Für die autonome Navigation von Fahrzeugen im Straßenverkehr befinden sich zahlreiche Systeme in Entwicklung. Solche Ansätze lassen sich auf die industrielle Anwendung nur begrenzt übertragen. So können im Innenbereich von Werkhallen Annahmen über die vorgefundene Situation in die Steuerungsverfahren eingehen oder individuell eingelernt werden, und die Sollgeschwindigkeiten sind zumeist geringer. Andererseits interagieren Fahrzeuge und Bedienpersonal im industriellen Bereich viel enger, es gibt im Gegensatz zum Straßenverkehr keine dedizierten Fahrwege, die Sichtweite ist oft eingeschränkt, etwa durch lagernde Objekte oder Regale, und Zielpositionen müssen wesentlich exakter angefahren werden. Besonders mit einem im Straßenverkehr häufig verwendeten satellitengestützten Orientierungssystem (z.B. GPS, Galileo) lassen sich die genannten Anforderungen nicht erfüllen, zumal im Innenbereich ein solches Signal auch zu schwach ist.

Dementsprechend beschäftigt sich die Literatur zu Lösungen für den Straßenverkehr weniger mit der Aufgabe, die Position und die Geschwindigkeit besonders sicher zu ermitteln, sondern verlässt sich hier auf herkömmliche Systeme, wie einen Tacho oder ein im Bedarfsfall auch extrapoliertes GPS-Signal. Die wesentliche Herausforderung ist stattdessen die Berechnung von Fahrwegen unter Berücksichtigung der Verkehrssituation. Ein Beispiel hierfür ist die US 5,128,874, in der ein Inertialsensor mit einem optischen Sensor kombiniert wird, wie einem Laserscanner oder einer Stereokamera. Dabei wird aus von dem optischen Sensor aufgenommenen Daten der optische Fluss der umgebenden Szenerie ausgewertet, um unter Berücksichtigung des inertial gemessenen Translations- oder Rotationszustands Alternativrouten zur Vermeidung von Hindernissen aufzufinden. Informationen über Position und Geschwindigkeit liefert hierbei also nur der nicht sichere Inertialsensor, da der optische Sensor allein für die Vorausplanung und nicht für die Positionsbestimmung eingesetzt wird.

Aus der EP 1 776 617 B1 ist ein Verfahren zur sicheren Positionsüberwachung bekannt, bei dem zwei Positionsmessgeräte eingesetzt werden, um in einer Werkzeugmaschine Position und Geschwindigkeit zu überwachen. Es bleibt bei diesem herkömmlichen Verfahren offen, wie die Positionsdaten gewonnen werden. Damit werden die weiter oben beschriebenen Nachteile eines sicheren Drehgebersystems aber nicht vermieden, so dass nicht ermöglicht ist, die tatsächliche Position und Geschwindigkeit eines Fahrzeugs sicher zu erkennen.

Aus der WO2004/081598 A2 ist eine aktive optoelektronische Vorrichtung zur Erkennung von Hindernissen insbesondere für die autonome Navigation bekannt. Dieser Sensor wertet den optischen Fluss einer durch einen Bildsensor aufgenommenen Szenerie aus. In einer Ausführungsform sind mehrere derartige Sensoren vorgesehen, deren Sichtfeld zumindest teilweise überlappen kann. Zusätzlich zu dem auf optischem Fluss basierenden Sensor können Mess- und Ortungsgeräte vorgesehen sein, nämlich ein Gyroskop, ein Kompass oder eine Satellitenpositioniereinheit.

Die US 6,194,695 B1 offenbart eine Matrix mit photoempfindlichen Elementen zur Messung eines linearen optischen Flusses.

Aus der US 5,717,792 ist ein Schätzer für Objektbewegungen auf Basis des optischen Flusses bekannt.

Die DE 10 2004 010 197 A1 offenbart ein Verfahren zur Funktionskontrolle einer Positionsermittlungs- oder Umgebungserfassungseinrichtung eines Fahrzeugs oder zur Kontrolle einer digitalen Karte. Das Fahrzeug bestimmt per GPS seine aktuelle Position und erfasst mittels Laserscanner Äbstandsbilder seiner Umgebung. In den Abstandsbildern werden Objekte der Fahrzeugumgebung identifiziert und mit Ausschnitten einer digitalen Karte abgeglichen. Treten dabei Abweichungen auf, so wird auf einen Fehler in mindestens einem der drei Komponenten Positionsbestimmung, Objekterkennung oder digitale Karte geschlossen und ein entsprechendes Signal an ein Fahrzeugassistenzsystem ausgegeben.

Es ist daher Aufgabe der Erfindung, eine einfache und sichere Überwachung der tatsächlichen Position und/oder Geschwindigkeit zu ermöglichen.

Diese Aufgabe wird durch einen Sicherheitssensor gemäß Anspruch 1 sowie ein Verfahren zur berührungslosen Messung von Positionen, Wegen und/oder Geschwindigkeiten gemäß Anspruch 12 gelöst.

Dabei geht die Erfindung von der Idee aus, Positionsdaten aus für sich jeweils nicht notwendig sicheren Quellen zu kombinieren, wobei zumindest eine der beiden Quellen eine direkte optische Messung des tatsächlich zurückgelegten Weges ist. Eine solche tatsächliche Weginformation wird mittels optischer Korrelation oder einer Auswertung des optischen Flusses der unmittelbaren Umgebung des Sensors gewonnen. Durch Kombination zweier unabhängiger Informationen kann eine hohe Zuverlässigkeit bei der Überwachung von Positionen und Geschwindigkeiten erreicht werden. Dabei lassen sich zeitabhängige Positionssignale, also eine Vielzahl von Positionsdaten und der jeweiligen Zeit, zu der diese Position eingenommen wurde, als Weg auffassen und mittels der Zeitbasis auch jeweils eine momentane oder eine Durchschnittsgeschwindigkeit berechnen und umgekehrt. Die Positionen werden von den meisten Sensoren, besonders auch von dem korrelationsbasierten optoelektronischen Sensor, zunächst nur relativ gewonnen. Bei bekanntem Abstand zu seiner Referenzfläche und einer anfänglichen oder periodischen Eichung der Absolutposition können solche Relativbewegungen aber bei Bedarf jeweils in Absolutpositionen umgerechnet werden.

Die Lösung hat den Vorteil, dass ein Schlupf zwischen Daten der Antriebssteuerung und tatsächlicher Fortbewegung keine Auswirkung auf die ermittelten Positionsdaten hat, da die erste Sensoreinheit auf optischer Korrelation beziehungsweise einem optischen Fluss beruht und somit die tatsächliche Umgebung direkt unabhängig von einem etwaigen Schlupf auswertet. Die ermittelten Positionen sind also besonders genau. Gleichzeitig muss zur Erreichung eines sicheren Systems weder die erste Sensoreinheit noch die zweite Positionsbestimmungseinheit schon allein sicher sein, so dass verhältnismäßig kostengünstige und allgemein verfügbare Bauelemente verwendet werden können. Insbesondere können auch zumindest von ihrem Arbeitsprinzip her bereits verfügbare korrelationsbasierte optoelektronische Sensoren eingesetzt werden, ohne dass diese notwendig sicher ausgelegt sein müssten. Somit entsteht bei geringem Aufwand ein sicheres Gesamtsystem.

Die erste Sensoreinheit ist bevorzugt ein sicherer korrelationsbasierter Sensor, und die Korrelierungseinheit ist dafür ausgebildet, die Güte des ermittelten zeitabhängigen Positionssignals zu bewerten, insbesondere ob die jeweilige Abbildung der Oberflächenstruktur eine ausreichende räumliche Intensitätsänderung über die Vielzahl von Lichtempfangselementen aufweist, und bei unzureichender Güte ein Signal auszugeben, dass die ermittelte Position unzuverlässig ist. Bei einer solchen Ausführungsform ist die genannte eine der beiden Quellen der Positionsdaten schon für sich zuverlässig und sicher, so dass ein besonders sicheres Gesamtsystem entsteht. Die erste Sensoreinheit erkennt selbstständig, wenn der von ihr aufgenommene Untergrund, die Lichtverhältnisse oder sonstige Bedingungen keine sichere Positionsbestimmung ermöglichen. Damit werden Reaktionen des den Sicherheitssensor einsetzenden Systems, welche zumindest in einer Quelle auf unzuverlässigen Positionsdaten beruhen, von vornherein verhindert.

Bevorzugt ist die zweite Positionsbestimmungseinheit eine Antriebssteuerung oder eine zweite Sensoreinheit, insbesondere ein satellitengestützter Positionsermittlungssensor, ein Drehgeber oder ein Motorfeedbacksystem. Eine derartige zweite Quelle für Positionsdaten ist in vielfacher Ausgestaltung verfügbar und sehr häufig in einem Fahrzeug ohnehin vorhanden. Damit reduziert sich der Zusatzaufwand, der benötigt wird, um die Positionsbestimmung des Sicherheitssensors sicher zu machen.

Alternativ ist die zweite Positionsbestimmungseinheit wie die erste Sensoreinheit ebenfalls ein zweiter korrelationsbasierter optoelektronischer Sensor, wobei der erste und der zweite korrelationsbasierte optoelektronische Sensor zueinander beabstandet angeordnet sind und/oder wobei die Auswertungseinheit dafür ausgebildet ist, eine Rotationslage des Sicherheitssensors zu berechnen. Die beiden Sensoren sind in diesem Fall bevorzugt untereinander baugleich. Da die beiden Sensoren unterschiedliche Sichtbereiche haben, können Ungenauigkeiten etwa durch unzureichende Oberflächenstrukturen ausgeglichen werden. Werden Positionsänderungen bezüglich zweier zueinander beabstandeter Sensoren bestimmt, ermöglicht dies auch, Eigendrehungen des Sicherheitssensors und somit dessen Rotationslage zu bestimmen. Damit werden ohne Bedarf an zusätzlicher Hardware weitere, je nach Anwendung sicherheitsrelevante Daten erfasst.

In bevorzugter Weiterbildung ist ein Sicherheitsausgang vorgesehen, über welchen die Auswertungseinheit ein Abschalt- oder Abbremssignal ausgeben kann. Dabei ist noch bevorzugter die Auswertungseinheit dafür ausgebildet, ein Abschalt- oder Abbremssignal auszugeben, wenn erstes und zweites Positionssignal um mehr als eine vorgegebene Positionsdifferenzschwelle voneinander abweichen und/oder wenn die Position einen erlaubten Bereich verlässt oder einen unerlaubten Bereich erreicht und/oder die Geschwindigkeit außerhalb eines Sollgeschwindigkeitsintervalls liegt. Über einen derartigen Sicherheitsausgang kann der Sensor direkt auf eine Gefährdung reagieren und die geeignete Gegenmaßnahme einleiten, welche in einem Anhalten, einem Abbremsen oder einer Geschwindigkeitsbegrenzung liegen kann. Die Positionsdifferenzschwelle dient dazu, zu große Abweichungen in den Positionsdaten als möglichen Defekt oder zumindest vorübergehende Unzuverlässigkeit eines und damit auch des erst durch Kombination sicheren gemeinsamen Positionssignals zu erkennen. Weitere Situationen, in denen auf eine Gefährdung reagiert werden sollte, sind bestimmte Positionen, die nicht verlassen oder umgekehrt nicht erreicht werden dürfen, oder kritische Geschwindigkeiten. Dabei ist auch eine gegenseitige Abhängigkeit möglich, also Positionen, die nicht zu schnell oder zu langsam durchfahren werden dürfen. Auf diese Weise können Weg und Geschwindigkeit flexibel im erlaubten und ungefährlichen Rahmen gehalten werden.

Noch bevorzugter ist die Auswertungseinheit dafür ausgebildet, dass Abschalt- oder Abbremssignal bei unzuverlässigem erstem und/oder zweitem Positionssignal oder einer zu hohen Abweichung zwischen erstem und zweitem Positionssignal über mehr als ein Höchstzeitintervall auszugeben. Über eine kurze, unkritische und ungefährliche Dauer wird also ein möglicher Fehler noch toleriert. Eine solche Situation kann etwa entstehen, wenn der korrelationsbasierte Sensor vorübergehend auf eine glatte Oberfläche trifft, die aber nur eine sehr kleine Ausdehnung hat. Aufgrund des Höchstzeitintervalls können unnötige Stillstandszeiten vermieden werden.

Sind dabei jeweils besonders bevorzugt Höchstzeitintervall, Positionsdifferenzschwelle, erlaubte Bereiche, unerlaubte Bereiche und/oder Sollgeschwindigkeitsintervall abhängig von der zuletzt gemessenen Geschwindigkeit, so wird die Flexibilität noch weiter erhöht. Je höher die Geschwindigkeit ist, desto höher ist im Allgemeinen das Gefährdungspotenzial. Gerade bei besonders niedrigen Geschwindigkeiten entsteht durch ein kurzes Abwarten, ob die Auswertungseinheit stabil eine Gefährdungssituation oder eine unzuverlässige Positionsbestimmung erkennt, häufig keine Gefahr. Der Beginn des Höchstzeitintervalls kann durch ein akustisches oder optisches Warnsignal begleitet werden, denn ein Teil der gefährlichen Situationen kann dann möglicherweise durch rasche Reaktion des Bedienpersonals noch verhindert werden, beziehungsweise Bedienpersonal kann sich selbst in Sicherheit bringen.

In einer Weiterbildung ist der Sicherheitssensor Teil einer mobilen Vorrichtung, insbesondere eines autonomen Fahrzeugs, und die Auswertungseinheit ist dafür ausgebildet, die Vorrichtung sicher zu navigieren. Die von dem Sicherheitssensor gewonnenen Positions-, Weg- und Geschwindigkeitsdaten dienen dann also zu einer unterstützenden bis hin zu einer automatischen Steuerung der Vorrichtung, bei der Gefährdungssituationen rechtzeitig erkannt und verhindert werden.

In der mobilen Vorrichtung ist die korrelationsbasierte Sensoreinheit nach unten gerichtet und die Korrelierungseinheit dafür ausgebildet, die Struktur des Bodens oder der Fahrbahn mittels der optischen Korrelation oder des optischen Flusses auszuwerten. Der Sensoreinheit steht somit eine immer zuverlässig vorhandene Oberfläche zur Verfügung, die auch in den allermeisten Fällen genügend Struktur aufweisen wird, um die Bestimmung der tatsächlichen Positionen zu jedem Zeitpunkt zu ermöglichen.

Besonders bevorzugt sind ein erster und zweiter korrelationsbasierter optoelektronischer Sensor zueinander beabstandet an der Vorrichtung angeordnet, insbesondere jeweils in einem Eckbereich, um über die Rotationslage eine Eigendrehung der Vorrichtung zu bestimmen, wobei insbesondere die Auswertungseinheit dafür ausgebildet ist, Kurvenfahrten mit mehr als einer Höchstkrümmung zu verhindern, wobei die Höchstkrümmung in oder von der Auswertungseinheit anhand der Art der Vorrichtung, der zuletzt gemessenen Geschwindigkeit, der Masse der Vorrichtung, von deren Ladung und/oder der Ladungsverteilung festgelegt werden kann. Die Eigendrehung der Vorrichtung ist eine wichtige ergänzende Angabe zur sicheren Navigation. Vor allem kritische Kurvenfahrten werden aufgrund der Erfindung ungefährlich.

Der erste korrelationsbasierte optoelektronische Sensor ist vorteilhafterweise am Rand der Vorrichtung angebracht, insbesondere in oder entgegen einer bevorzugten Fahrtrichtung, um Absturzkanten rechtzeitig erkennen zu können. Der korrelationsbasierte Sensor erfüllt hierbei ohne weiteren Aufwand noch eine Zusatzfunktion, mit der gefährliche Unfälle verhindert werden können. Es wäre alternativ denkbar, den Weg über die Absturzkante als verboten einzulernen. Mittels einer direkten Erkennung einer solchen Kante durch den korrelationsbasierten Sensor kann auf dieses Einlernen verzichtet beziehungsweise ein Unfall auch bei fehlerhaftem Einlernen verhindert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Draufsicht auf ein Fahrzeug und eine Grobdarstellung einer Ausführungsform des erfindungsgemäßen Sicherheitssensors;
- Fig. 2: eine Draufsicht auf einen korrelationsbasierten optoelektronischen Sensor, wie er einfach oder in doppelter Ausführung in dem Sicherheitssensor gemäß Figur 1 eingesetzt wird;
- Fig. 3a: eine schematische Darstellung einer von dem korrelationsbasierten optoelektronischen Sensor gemäß Figur 2 aufgenommenen Abbildung zur Erläuterung des Korrelationsverfahrens zur Bestimmung von Positionen;
- Fig. 3b: einen beispielhaften Intensitätsverlauf an Strukturelementen entlang einer Achse der Abbildung gemäß Figur 3a;
- Fig. 4: eine schematische Darstellung einer von dem korrelationsbasierten optoelektronischen Sensor gemäß Figur 2 aufgenommenen Abbildung in einer Ausführungsvariante mit einem optischen Gitter vor dem Bildsensor zur Bestimmung von zeitabhängigen Positionsdaten mit einem Ortsfrequenzfilterverfahren;
- Fig. 5: eine schematische Draufsicht auf ein mit einem Sicherheitssensor gemäß Figur 1 ausgerüstetes Fahrzeug zusammen mit dessen zurückgelegtem Weg und für das Fahrzeug vorgesehenen wie verbotenen Bereichen;
- Fig. 6: die schematischer Unteransicht eines Fahrzeug mit einer Ausführungsform des Sicherheitssensors, welcher auch Eigendrehungen bestimmen kann;
- Fig. 7a: eine schematische Darstellung eines Fahrzeugs mit einem Sicherheitssensor gemäß Figur 1 an einer Absturzkante; und
- Fig. 7b: eine Darstellung gemäß Figur 7a mit einem optischen Hindernis anstatt einer Absturzkante.

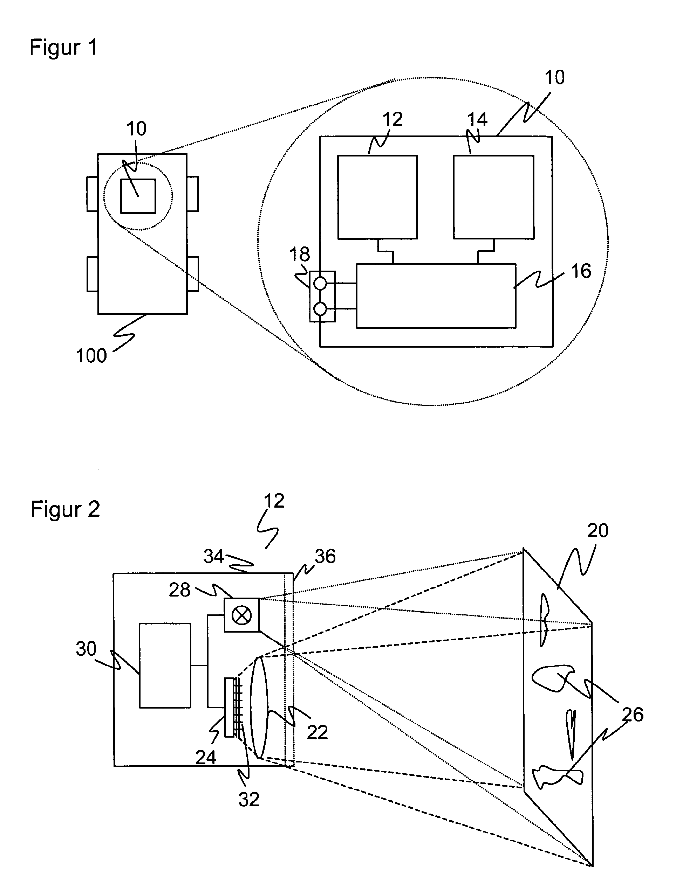

In Figur 1 ist ein Fahrzeug 100 dargestellt, welches mit einem Sicherheitssensor 10 gemäß einer ersten Ausführungsform der Erfindung ausgerüstet ist, um die Position, den Weg und/oder die Geschwindigkeit des Fahrzeugs 100 zu bestimmen. Das Fahrzeug 100 kann ein geführtes oder führerloses Fahrzeug sein (AGV, automated guided vehicle), welches mit Unterstützung oder basierend auf Daten des Sicherheitssensors sicher navigiert wird. Spezielle Beispiele für Fahrzeuge 100 sind Roboter und Ladefahrzeuge oder Gabelstapler.

Der Sicherheitssensor 10 ist in Figur 1 auf der rechten Seite in einer Ausschnittsvergrößerung erneut dargestellt. Er weist eine erste Positionsbestimmungseinheit 12 und eine zweite Positionsbestimmungseinheit 14 auf. Beide Positionsbestimmungseinheiten 12, 14 sind jeweils in der Lage, ein zeitabhängiges relatives oder nach Verrechnung mit einer vorherigen oder anfänglichen Position auch absolutes Positionssignal zu erzeugen. Die erste Positionsbestimmungseinheit 12 ist ein korrelationsbasierter optoelektronischer Sensor, dessen Aufbau und Arbeitsweise weiter unten im Zusammenhang mit den Figuren 2 bis 4 näher erläutert wird. Die zweite Positionsbestimmungseinheit 14 kann ebenfalls ein korrelationsbasierter optoelektronischer Sensor sein. Ebenso sind alternativ andere Möglichkeiten der Positions- oder Geschwindigkeitsbestimmung denkbar, etwa aus dem Standardantriebsstrang, also Steuerungsdaten und/oder Feedback des Antriebs des Fahrzeugs 100 für Leistungsaufnahme oder Motordrehzahl, oder die zweite Positionsbestimmungseinheit 14 ist ein Sensor mit einem anderen Prinzip als der optischen Korrelation, etwa ein Drehgeber, ein Motorfeedbacksystem oder auch ein satellitengestütztes oder terrestrisches Positionsbestimmungssystem, wobei letzteres auf eigenen Sendern etwa in einer Werkshalle beruht.

Die beiden Positionsbestimmungseinheiten 12, 14 liefern auf diese Weise unabhängige Positionssignale. Diese können als Drehzahlen, Positionsänderungen in mehreren Dimensionen oder Geschwindigkeiten an eine Auswertungseinheit 16 weitergegeben werden, welche mit beiden Positionsbestimmungseinheiten 12, 14 verbunden ist. Mit einer gemeinsamen Zeitbasis, möglicherweise für Absolutmessungen unterstützt durch eine anfängliche oder zuletzt berechnete Position, Drehstellung oder Fahrrichtung, verrechnet die Auswertungseinheit 16 die beiden unabhängigen Positionssignale zu einer gemeinsamen Position, einem Weg und/oder einer Geschwindigkeit.

Erkennt die Auswertungseinheit 16 eine unzulässige Situation, die in unzuverlässigen oder als kritisch eingestuften Positionswerten bestehen kann, so gibt sie über einen Ausgang 18, der bevorzugt als OSSD (Output Signal Switching Device) zweikanalig ausgeführt ist, ein Abschalt- oder Abbremssignal aus. Damit wird das Fahrzeug gebremst, angehalten, eine Gegenbewegung eingeleitet oder was immer erforderlich ist, eine Gefährdung von Bedienpersonal und Gerät zu vermeiden. Das Abschaltsignal wirkt entweder unmittelbar auf eine Gefahrenquelle ein, oder es wird an eine nicht dargestellte übergeordnete Sicherheitssteuerung weitergegeben, welche ihrerseits die Gefahrenquelle absichert.

Durch die Auswertung zweier Positionssignale aus unterschiedlichen Quellen, nämlich den Positionsbestimmungseinheiten 12, 14, ist die gemeinsame Position, der Weg und/oder die Geschwindigkeit sicher bestimmt. Zusätzlich können die Komponenten des Sicherheitssensors 10, vor allem die Auswertungseinheit 16, mit verschiedenen Maßnahmen zur Erreichung von Fehlersicherheit ausgestattet sein. Dazu zählen Selbsttests, mehrfache Auswertungs- oder Kommunikationspfade, welche sowohl in Hardware als auch in Software erfolgen können, zweikanalige Anschlüsse und Schnittstellen. Hinsichtlich der Auswertungseinheit 16 ist sowohl denkbar, mehrere gleiche, also redundante Auswertungsbausteine vorzusehen, als auch unterschiedliche diversitäre Hardware aus der Gruppe von Mikroprozessoren, ASICs (Application Specific Integrated Circuit), FPGAs (Field Programmable Gateway Array), PLDs (Programmable Logic Device), DSPs (Digital Signal Processor) zu wählen. Die zu erfüllenden Sicherheitsanforderungen für eine geforderte Sicherheitskategorie des Sicherheitssensors 10 sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Ausbildung des korrelationsbasierten optoelektronischen Sensors 12 oder, in einigen Ausführungsformen, auch beider Positionsbestimmungseinheiten 12, 14 wird nun unter Bezugnahme auf die schematische Darstellung der Figur 2 erläutert. Hier wie im Folgenden bezeichnen die gleichen Bezugszeichen gleiche Merkmale. Das Licht von einem Referenzobjekt 20, etwa dem Boden unter dem Fahrzeug 100, trifft über eine Abbildungsoptik 22, beispielsweise eine Linse oder ein Linsensystem, auf einen Lichtempfänger 24. Anstelle der Linse kann als Abbildungsoptik 14 auch ein Prisma oder eine Prismenanordnung eingesetzt werden, die besonders FFT-basierte Auswertung (Fast Fourier Transformation) unterstützt. Dieser Lichtempfänger 24 ist in der Lage, ein ortsaufgelöstes Abbild der Oberfläche des Referenzobjekts 20 und insbesondere von Oberflächenstrukturen 26 auf dem Referenzobjekt 20 zu erzeugen. Dazu kann ein zeilen- oder matrixförmiger CCD- oder CMOS-Chip mit einer Vielzahl von Pixeln oder Lichtempfangselementen, aber auch eine Anordnung oder Zeile von Photodioden verwendet werden.

Das Referenzobjekt 20 wird von einer aktiven Lichtquelle 28 beleuchtet. Diese Lichtquelle 28 kann eine gewöhnliche Glühbirne oder Halogenleuchte sein, wird in der Praxis aber wegen der Baugröße und der Lichtstärke bevorzugt eine Halbleiterlichtquelle sein, also eine oder eine Mehrzahl von LEDs oder Laserdioden.

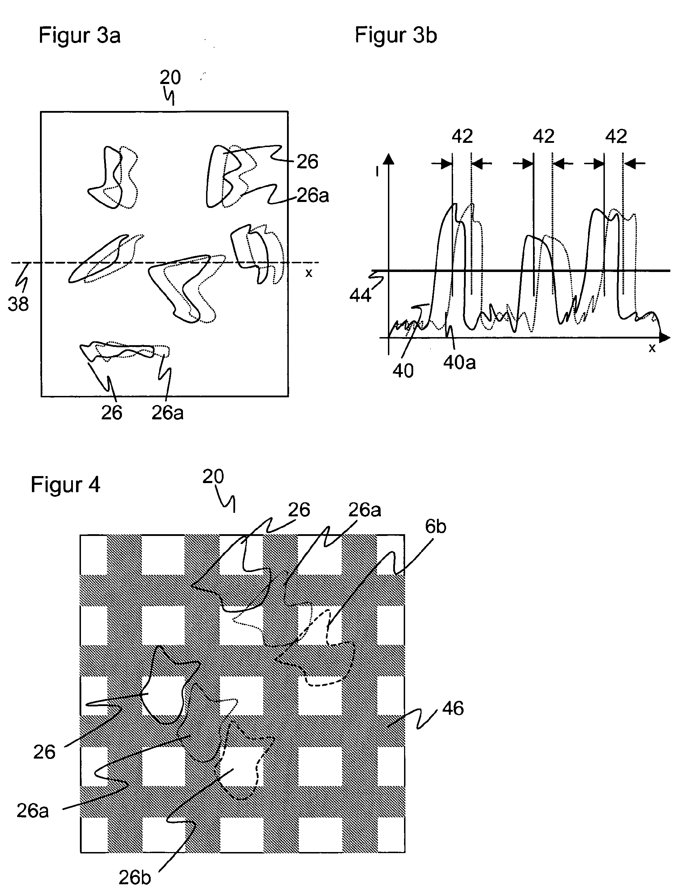

Mit Lichtquelle 28 und Lichtempfänger 24 ist eine Steuerungs- und Korrelierungseinheit 30 verbunden. Diese empfängt Lichtsignale des Lichtempfängers 24 und steuert die Beleuchtung des Referenzobjekts 20 über Ein- und Ausschalten sowie Leistungsaufnahme der Lichtquelle 28. In der Korrelierungseinheit 30 sind außerdem eines oder mehrere der weiter unten im Zusammenhang mit den Figuren 3 und 4 beschriebene Verfahren zur Bestimmung von Positions-, Weg- oder Geschwindigkeitssignalen implementiert. Dabei ist ein in Figur 2 dargestelltes Gitter 32 nur in besonderen Ausführungsformen vorgesehen, welche wie später zu Figur 4 beschrieben auf einem Ortsfrequenzfilterverfahren beruhen.

Der Sensor 11 ist in einem Gehäuse 34 mit einer Frontscheibe 36 untergebracht. Denkbar ist auch, Korrelierungseinheit 30 oder Lichtquelle 28 in einem oder mehreren separaten Gehäuse vorzusehen. Die Korrelierungseinheit 30 könnte auch ganz oder teilweise in einer übergeordneten Sicherheitssteuerung oder in der Auswertungseinheit 16 implementiert sein.

Figur 3a zeigt eine beispielhafte schematische Frontalansicht der Oberfläche des Referenzobjekts 20, wie sie auch den auszuwertenden Signalen des Lichtempfängers 24 entspricht. Dabei sind mit durchgezogenen Linien Strukturmerkmale 26 und mit gestrichelten Linien dieselben Strukturmerkmale 26a zu einem späteren Zeitpunkt dargestellt. Die Strukturmerkmale 26 haben sich also durch eine Relativbewegung des Sensors 12 gegenüber dem Referenzobjekt 20 verschoben. Aus dieser Verschiebung kann der Weg, den der Sensor 10 und damit das Fahrzeug 100 bezüglich des Referenzobjekts 20 in X- und Y-Richtung zurücklegt, also des Bodens, und mit Hilfe einer Zeitbasis auch die Geschwindigkeit berechnet werden. Für absolute zeitabhängige Positionsänderungen wird der Abstand zum Boden eingelernt. Absolute Positionsangaben können durch eine Anfangsposition ermittelt werden.

Bei den Strukturmerkmalen 26 handelt es sich um natürlicherweise vorhandene optische Unebenheiten, etwa die natürliche Textur des Bodens oder einer Wand. Eine natürliche Rauheit kann durch schräge Montage des Sensors 12 oder schräge Beleuchtung durch die Lichtquelle 28 optisch verstärkt werden. In einer alternativen Ausführungsform ist auch denkbar, die Strukturmerkmale 26 gezielt zu verstärken, indem das Referenzobjekt 20, insbesondere ein Hallenboden, mit einem grobkörnigen Anstrich, Farbmerkmalen oder einem Muster, auch einer Kodierung oder einem Barcode, versehen wird. Auch durch Verwendung einer Optik 22 mit hoher Auflösung kann die vorhandene feinere Struktur besser ausgenutzt werden, so dass auch höhere Geschwindigkeiten gemessen werden können.

Figur 3b illustriert die Intensitätsverteilung I für eine Projektion in X-Richtung entlang der gestrichelten Linie 38 der Figur 3a. Dabei entspricht die durchgezogene Funktion 40 der durch Strukturmerkmale 26 zu einem Zeitpunkt aufgeprägten Intensität, die gestrichelte Funktion 40a dagegen der durch Strukturmerkmale 26a zu einem späteren Zeitpunkt aufgeprägten Intensität. Die Relativbewegung in X-Richtung entspricht dem Versatz 42 der beiden Funktionen 40, 40a gegeneinander. Die Auswertung ist selbstverständlich nicht auf die X-Richtung beschränkt, dies dient nur der vereinfachten Darstellung; die Intensität kann vielmehr als volle zweidimensionale Funktion ausgewertet werden.

Um den Versatz der Strukturmerkmale 26 gegenüber den Strukturmerkmalen 26a zu bestimmen, sind in der Korrelierungseinheit 30 optische Korrelationsverfahren oder Bildkorrelationsverfahren implementiert. In den beiden zu verschiedenen Zeiten aufgenommenen unterschiedlichen Bildern werden also die Strukturmerkmale 26 nachverfolgt und im späteren Bild mit den Strukturmerkmalen 26a identifiziert. Anhand der bekannten Pixelgröße des Lichtempfängers 24 kann die Korrelierungseinheit 30 die Bewegung in X- und Y-Richtung ermitteln. Geeignete mathematische Verfahren für die Bestimmung der Korrelation sind grundsätzlich bekannt, beispielsweise eine Kreuzkorrelation oder auf Fourieranalyse basierende Verfahren. Eine andere Möglichkeit ist, aus mehreren Abbildungen den optischen Fluss zu schätzen, welcher neben Variationen durch veränderliches Umgebungslicht, geänderte Reflexionswinkel, Abschattungen und ähnliche Störeffekte eine wesentliche durch die Relativbewegung erzeugte Komponente der zeitlichen Abhängigkeit enthält.

In einer besonderen Ausführungsform kann bereits der Sensor 12 fehlersicher ausgelegt sein. Dazu bestimmt die Korrelierungseinheit 30 nicht nur in der beschriebenen Weise den Versatz und daraus den Weg und die Geschwindigkeit, sondern bewertet zugleich, wie genau diese Auswertung ist. Genügt diese Bewertung vorgegebenen Sicherheitsanforderungen nicht, so wird an die Auswertungseinheit 16 ein Signal ausgegeben, dass die Positionsbestimmung momentan unzuverlässig ist.

Einen denkbaren Anteil für die Bewertung bzw. ein Gütemaß liefern bereits die meisten der beschriebenen mathematischen Auswertungsverfahren, etwa in Form eines Korrelationskoeffizienten. Ein wichtiges weiteres Merkmal ist, ob das Referenzobjekt 20 überhaupt genügend Struktur aufweist, also genügend stark ausgeprägte Strukturmerkmale 26. Die Struktur kann, wie in Figur 3b dargestellt, durch eine Schwellbewertung der Intensitätsfunktion mit einer Schwelle 44 untersucht werden. Auf diese Weise werden Minima oder Maxima der Intensitätsfunktion identifiziert. Man kann nun verschiedene Forderungen stellen: es müssen überhaupt genügend Extrema, also erkennbare Strukturmerkmale 26 vorhanden sein, die Extrema und demnach die Strukturmerkmale 26 müssen eine gewisse Steuerung aufweisen, also repräsentativ sein, oder die Ausprägung der Extrema muss mit einem aufwändigeren Verfahren als allein mit einer Schwelle geprüft werden, um sie von Rauschen oder Störeffekten zu unterscheiden.

Die Güte kann einige oder alle diese und weitere Faktoren mit unterschiedlicher Gewichtung berücksichtigen, um zu entscheiden, ob das ausgegebene Weg- und Geschwindigkeitssignal zuverlässig wäre und ob insbesondere genügend Struktur des Referenzobjekts 20 aufgelöst werden kann. Ein besonderer Grund für fehlende Struktur kann auch in einer Fehlfunktion, einem Ausfall, einer falschen Justage oder Montage des Lichtempfängers 24 oder der Lichtquelle 28 liegen.

Figur 4 zeigt die Abbildung einer alternativen Ausführungsform eines korrelationsbasierten Sensors 12, bei welchem das Beugungsgitter 32 gemäß Figur 2 im Gegensatz zu den bisher beschriebenen Ausführungsformen eingesetzt ist, um ein Ortsfrequenzfilterverfahren in der Korrelierungseinheit 30 implementieren zu können.

Anstelle eines Gitters 32 sind andere Elemente vorstellbar, welche der Abbildung des Referenzobjekt 20 eine Grundstruktur aufprägen. Weiterhin ist denkbar, diese Grundstruktur nicht optisch, sondern erst dem Signal des Lichtempfängers 24 oder den Bilddaten in der Korrelierungseinheit 30 rechnerisch aufzuprägen. Dabei wird also das Gitter durch die gleichmäßige Pixelstruktur des Lichtempfängers 24 und durch eine positive und negative Gewichtung der Helligkeit der einzelnen Pixel erzeugt.

Das Beugungsgitter 32 prägt der Abbildung gemäß Figur 4 eine Grundstruktur 46 aus grauen Gitterbalken auf, die vereinfacht dargestellt ist, denn in der Realität könnte hier ein Beugungsmuster entstehen. Das bewegte Bild des Referenzobjekts 20 ist somit mit einer Gitterstruktur überlagert, wodurch man ein periodisches Ausgangssignal des Lichtempfängers 24 erhält, dessen Frequenz wiederum zu der Geschwindigkeit proportional ist. Dies wird sofort verständlich, wenn man die mit durchgezogenen Linien dargestellte Strukturmerkmale 26 in der Zeit verfolgt, die sich zunächst an die mit gepunkteten Linien dargestellten Positionen 26a und zu einem noch späteren Zeitpunkt an die mit gestrichelten in dargestellten Positionen 26b verschieben. Die Strukturen 26 werden dabei periodisch von dem Gittermuster 46 verdeckt.

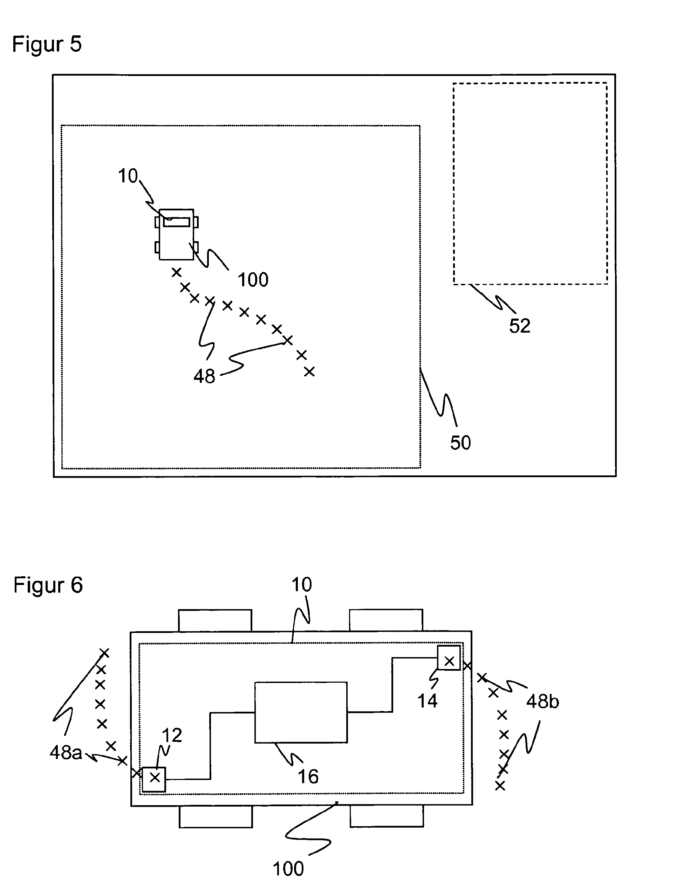

Unter Bezugnahme auf Figur 5 werden nun erfindungsgemäße Ausführungsformen zur sicheren Navigation des Fahrzeugs 100 mittels des Sicherheitssensor 10 beschrieben. Die Kreuze 48 bezeichnen Positionen, die das Fahrzeug in der Vergangenheit besetzt hat. Sie werden, über einen gewissen Zeitraum, in der Auswertungseinheit 16 zusammen mit dem zugehörigen Zeitpunkt abgelegt, so dass Informationen über den Weg 48, die aktuelle Position und die aktuellen sowie bei Bedarf auch vergangenen Momentan- oder Durchschnittgeschwindigkeiten berechnet werden können.

Dabei stammt jede Momentanposition aus einer Verrechnung der beiden Positionssignale der Positionsbestimmungseinheiten 12, 14. Dies kann der einfache Mittelwert sein, aber auch wahlweise unter Gewichtung einer allgemeinen oder momentanen Zuverlässigkeit der Positionsbestimmungseinheiten 12, 14 sowie unter Berücksichtigung aktueller und früherer Positionen, Wege und/oder Geschwindigkeiten errechnet werden. Weichen die beiden Positionssignale aus der Positionsbestimmungseinheit 12, 14 untereinander zu stark voneinander ab, so wird in der Auswertungseinheit ein Abschaltsignal erzeugt. Das gleiche gilt, wenn eines der beiden Signale als unzuverlässig oder eine der Positionsbestimmungseinheiten 12, 14 als defekt erkannt wird. Eine Abweichung oder ein Defekt über eine kurze Dauer können toleriert werden, solange dadurch keine Gefährdung entsteht. Auf diese Weise wird vermieden, dass kleine optisch strukturlose Flächen zu einer verfrühten Abschaltung führen, obwohl kurz darauf wieder zuverlässige Signale geliefert würden. Die zulässige Höchstzeit kann bei kleinen Fahrzeuggeschwindigkeiten länger sein als bei großen. Die noch tolerierten Abweichungen und die Höchstzeiten können auch von einer geforderten Zuverlässigkeit oder von einer zu erreichenden Sicherheitskategorie abhängen.

Umgekehrt ist denkbar, dass bereits ein kritisches Einzelsignal aus nur einer der beiden Positionsbestimmungseinheiten 12, 14 ausreicht, um eine Abschaltung zu erzeugen. Denn wenn dies auch keine sichere Information ist, so sind unnötige Ausfallzeiten in jedem Fall einem vermeidbaren Unfall vorzuziehen.

Das Fahrzeug 100 ist in Figur 5 innerhalb eines erlaubten Bereiches 50 gezeichnet. Positionen außerhalb dieses Bereichs erkennt die Auswertungseinheit 16 und leitet eine Gegenbewegung oder eine Abschaltung ein. Damit wird vermieden, dass das Fahrzeug seinen vorgesehenen Arbeitsbereich verlässt. Umgekehrt können Zonen 52 vorgesehen sein, in die das Fahrzeug 100 nicht eindringen darf. Statt einer sofortigen Abschaltung kann auch zunächst nur eine Warnung erzeugt werden, etwa um dem Fahrer Gelegenheit zum Umkehren zu geben, oder damit Bedienpersonal die eine verbotene Zone 52 verlässt oder freigibt. Ähnlich kann auch die Geschwindigkeit überwacht und in einem erlaubten Intervall gehalten werden. Es sind auch kombinierte Schwellen vorstellbar, also Geschwindigkeiten, die an bestimmten Positionen einzuhalten sind, oder dynamische Grenzen 50, 52 und Schwellen, die sich an die aktuellen oder zuletzt gemessenen Geschwindigkeit adaptieren.

Figur 6 zeigt eine Unteransicht des Fahrzeugs 100 mit einer Ausführungsform des Sicherheitssensors 10, bei dem die beiden Positionsbestimmungseinheiten 12, 14 im nahezu größtmöglichen Abstand zueinander montiert sind. Vorzugsweise sind hier beide Positionsbestimmungseinheiten 12, 14 korrelationsbasierte optoelektronische Sensoren, die jeweils für sich in der Lage sind, ein Wegsignal 48a, 48b zu erzeugen.

Wegen Eigendrehungen des Fahrzeugs 100 fallen die Wege 48a, 48b nicht aufeinander. Aus den Abweichungen kann die Auswertungseinheit 16 die aktuelle Winkelgeschwindigkeit der Eigendrehung und die Rotationslage des Fahrzeugs 100 ermitteln. So erkennt man leicht in Figur 6, dass das Fahrzeug 100 in der unmittelbaren Vergangenheit eine Drehung gegen den Uhrzeigersinn ausgeführt hat, aus der Verteilung der einzelnen Kreuze 48a, 48b gewinnt man auch einen Eindruck über die Geschwindigkeiten von Translation und Rotation. Derartige Informationen kann die Auswertungseinheit 16 verwenden, um zu enge Kurvenfahrten zu verhindern, die zu einem Überkippen führen könnten. Dabei kann die aktuelle Geschwindigkeit, die Masse, die Ladung und die Ladungsverteilung berücksichtigt werden. So wird ein Gabelstapler mit Ladung weit unten auf der Gabel schneller fahren dürfen als ein Gabelstapler samt Ladung mit hohem Schwerpunkt. Die Reaktion der Auswertungseinheit 16 auf erkannte zu enge Kurven kann in einem Gegenlenken, einer Blockierung der Lenkung über ein gewisses Maß hinaus, einer Geschwindigkeitsbegrenzung, einem Abbremsen und Kombinationen hieraus bestehen.

Die somit bekannte Rotationslage, die bei Kenntnis einer Anfangsorientierung des Fahrzeugs 100 auch absolut ist, vervollständigt die notwendigen Informationen für eine sichere Navigation, da nun in Abhängigkeit von Fahrzeug und Ladung das jeweils eingenommene Volumen und damit potentielle Kollisionen vollständig berechenbar sind.

Ergänzend zu den Informationen des Sicherheitssensors 10 werden in weiteren Ausführungsformen Daten über die Werkhalle in der Auswertungseinheit 16 eingelernt, oder die Innenwände werden mittels eines Laserscanners oder ähnlichem erkannt, um bei der Navigation Kollisionen mit zu vermeiden, die immer dann entstehen, wenn das in Lage und Rotation bekannte Eigenvolumen samt einer Pufferzone einen bereits belegten Raum einnehmen würde.

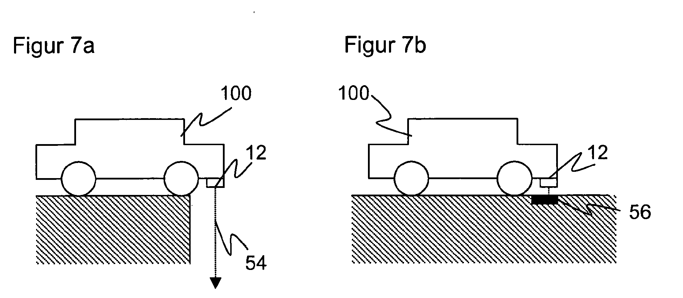

Die Figuren 7a und 7b erläutern eine Absicherung gegen Abstürze an Kanten oder Treppen, welche der korrelationsbasierte Sensor 12 zusätzlich zu den Positionsdaten liefern kann. Figur 7a zeigt, wie ein in Fahrtrichtung montierter korrelationsbasierter Sensor 12 in seiner Blickrichtung vergeblich nach einer Referenzfläche 20 im erwarteten Fahrzeug-Boden-Abstand sucht. Dieses Ausbleiben der Positionsdaten führt in der Auswertungseinheit 16 zu einer Absicherung. Alternativ erkennt der korrelationsbasierte Sensor 12 auch selbstständig die mangelnde Einsatzbereitschaft und meldet dies an die Auswertungseinheit 16.

Vorzugsweise sichert die Auswertungseinheit 16 erst nach einer gewissen Zeitspanne ab, die geschwindigkeitsabhängig und so kurz ist, dass auch nach ihrem Ablauf noch kein Absturz erfolgt. Wie Figur 7b erläuternd zeigt, könnte nämlich die Ursache für das Ausbleiben des Signals von dem Sensor 12 auch eine Fläche ohne oder mit zu geringer optischer Struktur sein, beispielsweise ein Gullydeckel 56. Hier wäre eine Abschaltung nicht angemessen, weil kurz hinter dem Gullydeckel 56 wieder zuverlässige Signale ermittelt werden. Einen ähnlichen Effekt bewirkt ein zu großer Schlupf im Antriebsstrang, der vorübergehend eine zu große oder zu kleine scheinbare Bewegung verursacht.

Die verschiedenen beschriebenen Ausführungsformen lassen sich in vielfältiger Weise miteinander kombinieren. Zahlreiche Merkmale lassen sich im Zusammenhang mit einer bestimmten Figur besonders gut erläutern, funktionieren aber ebenso gut in anderen Kombinationen.

## Patentansprüche

1. Sicherheitssensor (10) zur berührungslosen Messung von Positionen, Wegen und/oder Geschwindigkeiten, wobei der Sicherheitssensor (10) mindestens eine erste Sensoreinheit (12), die ein erstes zeitabhängiges Positionssignal erzeugen kann, eine zweite Positionsbestimmungseinheit (14), die ein zweites zeitabhängiges Positionssignal erzeugen kann, sowie eine Auswertungseinheit (16) aufweist, welche dafür ausgebildet ist, das erste und das zweite Positionssignal sicher zu der Position, zu dem Weg und/oder zu der Geschwindigkeit zu verrechnen,
wobei die erste Sensoreinheit (12) ein erster korrelationsbasierter optoelektronischer Sensor ist, der eine Lichtquelle (28), einen Lichtempfänger (24) mit einer Vielzahl von Lichtempfangselementen sowie eine Korrelierungseinheit (30) aufweist, die dafür ausgebildet ist, aus mindestens zwei nacheinander von dem Lichtempfänger (24) aufgenommenen Abbildungen einer Oberflächenstruktur (20, 26) ein zeitabhängiges Positionssignal mittels eines optischen Korrelationsverfahrens und/oder durch Auswertung des optischen Flusses zu bestimmen,
wobei ein Sicherheitsausgang (18) vorgesehen ist, über welchen die Auswertungseinheit (16) ein Abschalt- oder Abbremssignal ausgeben kann, und wobei die Auswertungseinheit dafür ausgebildet ist, das erste und das zweite Positionssignal sicher zu einem Wert für die Position, den Weg und/oder die Geschwindigkeit zu verrechnen und ein Abschalt- oder Abbremssignal auszugeben, wenn sie einen unzuverlässigen oder als kritisch eingestuften Wert erkennt, bei dem erstes und zweites Positionssignal um mehr als eine vorgegebene Positionsdifferenzschwelle voneinander abweichen.

2. Sicherheitssensor (10) nach Anspruch 1,
wobei die erste Sensoreinheit (12) ein sicherer korrelationsbasierter Sensor ist und die Korrelierungseinheit (30) dafür ausgebildet ist, die Güte des ermittelten zeitabhängigen Positionssignals zu bewerten, insbesondere ob die jeweilige Abbildung der Oberflächenstruktur (20, 26) eine ausreichende räumliche Intensitätsänderung über die Vielzahl von Lichtempfangselementen (24) aufweist, und bei unzureichender Güte ein Signal auszugeben, dass die ermittelte Position unzuverlässig ist.

3. Sicherheitssensor (10) nach Anspruch 1 oder 2,
wobei die zweite Positionsbestimmungseinheit (14) eine Antriebssteuerung oder eine zweite Sensoreinheit, insbesondere ein satellitengestützter Positionsermittlungssensor, ein Drehgeber oder ein Motorfeedbacksystem ist.

4. Sicherheitssensor (10) nach Anspruch 1 oder 2,
wobei die zweite Positionsbestimmungseinheit (14) ein zweiter korrelationsbasierter optoelektronischer Sensor ist, und wobei der erste und der zweite korrelationsbasierte optoelektronische Sensor (12, 14) zueinander beabstandet angeordnet sind und/oder wobei die Auswertungseinheit (16) dafür ausgebildet ist, eine Rotationslage des Sicherheitssensors (10) zu berechnen.

5. Sicherheitssensor (10) nach einem der vorhergehenden Ansprüche,
wobei die Auswertungseinheit (16) dafür ausgebildet ist, ein Abschalt- oder Abbremssignal auszugeben, wenn die Position einen erlaubten Bereich (50) verlässt oder einen unerlaubten Bereich (52) erreicht oder wenn die Geschwindigkeit außerhalb eines Sollgeschwindigkeitsintervalls liegt.

6. Sicherheitssensor (10) nach Anspruch 5,
wobei die Auswertungseinheit (16) dafür ausgebildet ist, das Abschalt- oder Abbremssignal bei unzuverlässigem erstem und/oder zweitem Positionssignal oder einer zu hohen Abweichung zwischen erstem und zweitem Positionssignal über mehr als ein Höchstzeitintervall auszugeben.

7. Sicherheitssensor (10) nach Anspruch 5 oder 6,
wobei Höchstzeitintervall, Positionsdifferenzschwelle, erlaubte Bereiche, unerlaubte Bereiche und/oder Sollgeschwindigkeitsintervall abhängig von der zuletzt gemessenen Geschwindigkeit sind.

8. Mobile Vorrichtung (100), insbesondere autonomes Fahrzeug, mit einem Sicherheitssensor (10) nach einem der Ansprüche 1 bis 7, wobei die Auswertungseinheit (16) dafür ausgebildet ist, die Vorrichtung (100) sicher zu navigieren.

9. Mobile Vorrichtung (100) nach Anspruch 8,
wobei die korrelationsbasierte Sensoreinheit (12) nach unten gerichtet und die Korrelierungseinheit (30) dafür ausgebildet ist, die Struktur (20, 26) des Bodens oder der Fahrbahn mittels der optischer Korrelation oder des optischen Flusses auszuwerten.

10. Mobile Vorrichtung (100) nach Anspruch 8 oder 9 mit einem Sicherheitssensor (10) nach Anspruch 4, wobei erster und zweiter korrelationsbasierter optoelektronischer Sensor (12, 14) zueinander beabstandet an der Vorrichtung (100) angeordnet sind, insbesondere jeweils in einem Eckbereich, um über die Rotationslage eine Eigendrehung der Vorrichtung (100) zu bestimmen, und wobei insbesondere die Auswertungseinheit (16) dafür ausgebildet ist, Kurvenfahrten mit mehr als einer Höchstkrümmung zu verhindern, wobei die Höchstkrümmung in oder von der Auswertungseinheit (16) anhand der Art der Vorrichtung (100), der zuletzt gemessenen Geschwindigkeit, der Masse der Vorrichtung (100) und von dessen Ladung und/oder der Ladungsverteilung festgelegt werden kann.

11. Mobile Vorrichtung (100) nach einem der Ansprüche 8 bis 10,
wobei der erste korrelationsbasierte optoelektronische Sensor (12) am Rand der Vorrichtung (100) angebracht ist, insbesondere in oder entgegen einer bevorzugten Fahrtrichtung, um Absturzkanten (54) rechtzeitig erkennen zu können.

12. Verfahren zur berührungslosen Messung von Positionen, Wegen und/oder Geschwindigkeiten, bei welchem ein erstes zeitabhängiges Positionssignal mit einem zweiten zeitabhängigen Positionssignal aus zwei unterschiedlichen Quellen (12, 14) sicher zu der Position, zu dem Weg und/oder zu der Geschwindigkeit verrechnet werden,
wobei das erste Positionssignal aus mindestens zwei nacheinander aufgenommenen Abbildungen einer insbesondere beleuchteten ersten Oberflächenstruktur (20) mittels eines optischen Korrelationsverfahrens und/oder durch Auswertung des optischen Flusses bestimmt wird,
wobei das erste und zweite Positionssignal sicher zu einem Wert für die Position, den Weg und/oder die Geschwindigkeit verrechnet werden,
wobei ein sicheres bschalt- oder Abbremssignal ausgegeben wird, wenn ein unzuverlässiger oder als kritisch eingestufter Wert erkannt wird, bei dem erstes und zweites Positionssignal um mehr als eine vorgegebene Positionsdifferenzschwelle voneinander abweichen.

13. Verfahren nach Anspruch 12,
wobei das zweite Positionssignal aus mindestens zwei nacheinander aufgenommenen Abbildungen einer von der ersten Oberflächenstruktur (20) verschiedenen insbesondere beleuchteten zweiten Oberflächenstruktur mittels eines optischen Korrelationsverfahrens und/oder durch Auswertung des optischen Flusses bestimmt wird, wobei insbesondere aus den Positionssignalen eine Rotationslage berechnet wird.

14. Verfahren nach Anspruch 12 oder 13,
wobei ein Abschalt- oder Abbremssignal in mindestens einer der folgenden Situationen ausgegeben wird: erstes und/oder zweites Positionssignal sind länger als ein Höchstzeitintervall unzuverlässig, die Position verlässt einen erlaubten Bereich (50) oder erreicht einen unerlaubten Bereich (52) oder die Geschwindigkeit liegt außerhalb eines Sollgeschwindigkeitsintervalls, wobei Höchstzeitintervall, Positionsdifferenzschwelle, erlaubte Bereiche (50), unerlaubte Bereiche (52) und/oder Sollgeschwindigkeitsintervall abhängig von der zuletzt gemessenen Geschwindigkeit sind.

15. Verfahren zur sicheren Navigation einer mobilen Vorrichtung (100), insbesondere eines führerlosen oder geführten Fahrzeugs, durch Bestimmung einer Position, eines Weges und/oder einer Geschwindigkeit mit einem Verfahren nach einem der Ansprüche 12 bis 14.

## Claims

1. A safety sensor (10) for the contactless measurement of positions, paths and/or speeds, wherein the safety sensor (10) has at least one first sensor unit (12) which can generate a first time-dependent position signal, a second position determining unit (14) which can generate a second time-dependent position signal and an evaluation unit (16) which is designed to allocate the first and second position signals reliably to the position, to the path and/or to the speed, wherein the first sensor unit (12) is a first correlation-based optoelectronic sensor which has a light source (28), a light receiver (24) having a plurality of light reception elements and has a correlation unit (30) which is designed to determine a time-dependent position signal from at least two images of a surface structure (20, 26) taken after one another by the light receiver (24) by means of an optical correlation process and/or by evaluating the optical flow,
wherein a safety output (18) is provided via which the evaluation unit (16) can output a switch-off or brake signal, and wherein the evaluation unit is designed to allocate the first and second position signals reliably to a value for the position, the path and/or the speed and to output a switch-off or brake signal when it recognises an unpermitted value or a value classified as critical at which the first and second position signals differ from one another by more than a predefined position difference threshold.

2. A safety sensor (10) in accordance with claim 1,
wherein the first sensor unit (12) is a safe correlation-based sensor and the correlation unit (30) is designed to evaluate the quality of the determined time-dependent position signal, in particular whether the respective image of the surface structure (20, 26) has a sufficient spatial intensity variation over the plurality of light reception elements (24) and to output a signal that the determined position is unpermitted on insufficient quality.

3. A safety sensor (10) in accordance with claim 1 or claim 2,
wherein the second position determination unit (14) is a drive control or a second sensor unit, in particular a satellite-assisted position determination sensor, a rotary encoder or a motor feedback system.

4. A safety sensor (10) in accordance with claim 1 or claim 2,
wherein the second position determination unit (14) is a second correlation-based optoelectronic sensor, and wherein the first and second correlation-based optoelectronic sensors (12, 14) are arranged spaced apart from one another, and/or wherein the evaluation unit (16) is designed to calculate a rotational position of the safety sensor (10).

5. A safety sensor (10) in accordance with any one of the preceding claims,
wherein the evaluation unit (16) is designed to output a switch-off or brake signal when the position exits an allowed region (50) or reaches an unallowed region (52) or when the speed is outside a desired speed interval..

6. A safety sensor (10) in accordance with claim 5,
wherein the evaluation unit (16) is designed to output the switch-off or brake signal on an unpermitted first and/or second position signal or on too high a difference between the first and second positions signals over more than one maximum interval.

7. A safety sensor (10) in accordance with claim 5 or claim 6,
wherein the maximum interval, the position difference threshold, allowed regions and/or the designed speed interval are dependent on the last measured speed.

8. A mobile apparatus (100), in particular an autonomous vehicle, having a safety sensor (10) in accordance with any one of the claims 1 to 7, wherein the evaluation unit (16) is designed to navigate the apparatus (100) reliably.

9. A mobile apparatus (100) in accordance with claim 8,
wherein the correlation-based sensor unit (12) is directed downwardly and the correlation unit (30) is designed to evaluate the structure (20, 26) of the ground or of the carriageway by means of the optical correlation or of the optical flow.

10. A mobile apparatus (100) in accordance with claim 8 or claim 9 having a safety sensor (10) in accordance with claim 4, wherein the first and second correlation-based optoelectronic sensors (12, 14) are arranged spaced apart from one another at the apparatus (100) to determine a rotation of the apparatus (100), in particular in each case in a corner region, via the rotational position, and
wherein in particular the evaluation unit (16) is designed to prevent cornering at more than a maximum curvature, with the maximum curvature being able to be fixed in or by the evaluation unit (16) with reference to the kind of apparatus (100), to the last measured speed, to the mass of the apparatus (100) and on its load and/or the load distribution.

11. A mobile apparatus (100) in accordance with any one of the claims 8 to 10,
wherein the first correlation-based optoelectronic sensor (12) is attached to the margin of the apparatus (100), in particular in or against a preferred direction of travel, in order to be able to recognise falling edges (54) in good time.

12. A method for the contactless measurement of positions, paths and/or speeds in which a first time-dependent position signal with a second time-dependent position signal from two difference sources (12, 14) are reliably allocated to the position, to the path and/or to the speed,
wherein the first position signal is determined from at least two images taken after one another of a first surface structure (20), in particular illuminated, by means of an optical correlation process and/or by evaluation of the optical flow, with the first and second position signals being reliably allocated to a value for the position, the path and/or the speed,
wherein a secure switch-off or brake signal is output when an unpermitted value or a value classified as critical is recognised in which the first and second position signals differ from one another by more than a predefined position difference threshold.

13. A method in accordance with claim 12,
wherein the second position signal is determined from at least two images taken after one another of a second surface structure, in particular illuminated, different from the first surface structure (20) by means of an optical correlation process and/or by evaluating the optical flow, wherein a rotational position is in particular calculated from the position signals.

14. A method in accordance with claim 12 or claim 13,
wherein a switch-off or brake signal is output in at least one of the following situations: first and/or second position signals are impermissible for longer than a maximum time interval; the position exits an allowed region (50) or reaches an unallowed region (52); or the speed is outside a desired speed interval, with the maximum time interval, the position difference threshold, allowed regions (50), unallowed regions (52) and/or the desired speed interval being dependent on the last measured speed.

15. A method for the safe navigation of a mobile apparatus (100), in particular of a driverless or driven vehicle, by determining a position, a path and/or a speed using a method in accordance with any one of the claims 12 to 14.

## Revendications

1. Capteur de sécurité (10) pour la mesure sans contact de positions, de trajets et/ou de vitesses, dans lequel le capteur de sécurité (10) comprend au moins une première unité de capteur (12), qui est capable d'engendrer un premier signal de position en fonction du temps, une seconde unité de détermination de position (14), qui est capable d'engendrer un second signal de position en fonction du temps, ainsi qu'une unité d'évaluation (16) qui est réalisée pour effectuer un calcul à partir du premier et du second signal de position donnant la position, le trajet et/ou la vitesse,
dans lequel la première unité de capteur (12) est un capteur optoélectronique basé sur une corrélation, qui comprend une source de lumière (28), un récepteur de lumière (24) avec une pluralité d'éléments récepteurs de lumière, ainsi qu'une unité de corrélation (30) qui est réalisée pour déterminer, à partir d'au moins deux images, prises l'une après l'autre par le récepteur de lumière (24), d'une structure de surface (20, 26), un signal de position en fonction du temps au moyen d'une procédure de corrélation optique et/ou par évaluation du flux optique,
dans lequel est prévue une sortie de sécurité (18) via laquelle l'unité d'évaluation (16) peut délivrer un signal de coupure ou de freinage, et l'unité d'évaluation est réalisée pour effectuer un calcul à partir du premier et du second signal de position donnant de manière sûre une valeur pour la position, le trajet et/ou la vitesse et pour délivrer un signal de coupure ou de freinage si elle reconnaît une valeur non fiable ou classée comme critique, pour laquelle le premier et le second signal de position s'écartent l'un de l'autre de plus d'un seuil de différence de position prédéterminé.

2. Capteur de sécurité (10) selon la revendication 1,
dans lequel la première unité de capteur (12) est un capteur de sécurité basé sur une corrélation, et l'unité de corrélation (30) est réalisée pour évaluer la qualité du signal de position déterminée en fonction du temps, en particulier si l'image respective de la structure de surface (20, 26) présente une variation d'intensité dans l'espace suffisante sur la pluralité d'éléments récepteurs de lumière (24), et pour délivrer en cas de qualité insuffisante un signal exprimant que la position déterminée n'est pas fiable.

3. Capteur de sécurité (10) selon la revendication 1 ou 2,
dans lequel la seconde unité de détermination de position (14) est une commande d'entraînement ou une seconde unité de capteur, en particulier un capteur de détermination de position par satellite, un capteur de rotation ou un système de retour moteur.

4. Capteur de sécurité (10) selon la revendication 1 ou 2,
dans lequel la seconde unité de détermination de position (14) est un second capteur optoélectronique basé sur une corrélation, et dans lequel le premier et le second capteur optoélectronique basés sur une corrélation (12, 14) sont agencés à distance l'un de l'autre et/ou dans lequel l'unité d'évaluation (16) est réalisée pour calculer une position en rotation du capteur de sécurité (10).

5. Capteur de sécurité (10) selon l'une des revendications précédentes,
dans lequel l'unité d'évaluation (16) est réalisée pour délivrer un signal de coupure ou de freinage si la position quitte une zone permise (50) ou atteint une zone non permise (52) ou si la vitesse tombe à l'extérieur d'un intervalle de vitesses de consigne.

6. Capteur de sécurité (10) selon la revendication 5,
dans lequel l'unité d'évaluation (16) est réalisée pour délivrer le signal de coupure ou de freinage si le premier et/ou le second signal de position n'est pas fiable ou s'il existe un écart trop important entre le premier et le second signal de position pendant plus d'un intervalle temporel maximum.

7. Capteur de sécurité (10) selon la revendication 5 ou 6,
dans lequel l'intervalle temporel maximum, le seuil de différence de position, les zones permises, les zones non permises et/ou l'intervalle de vitesses de consigne sont fonction de la vitesse mesurée en dernier lieu.

8. Dispositif mobile (100), en particulier véhicule autonome, comprenant un capteur de sécurité (10) selon l'une des revendications 1 à 7, dans lequel l'unité d'évaluation (16) est réalisée pour effectuer une navigation sûre du dispositif (100).

9. Dispositif mobile (100) selon la revendication 8,
dans lequel l'unité de capteur basée sur une corrélation (12) est orientée vers le bas et l'unité de corrélation (30) est réalisée pour évaluer la structure (20, 26) du sol ou de la voie de circulation au moyen de la corrélation optique ou au moyen du flux optique.

10. Dispositif mobile (100) selon la revendication 8 ou 9 comprenant un capteur de sécurité (10) selon la revendication 4, dans lequel le premier et le second capteur optoélectronique basés sur une corrélation (12, 14) sont agencés sur le dispositif (100) à distance l'un de l'autre, en particulier chacun dans une zone de coin, afin de déterminer via la position en rotation une rotation propre du dispositif (100), et dans lequel l'unité d'évaluation (16) en particulier est réalisée pour empêcher des circulations en courbe avec une courbure supérieure à une courbure maximum, la courbure maximum pouvant être déterminée dans ou par l'unité d'évaluation (16) au moyen du type de dispositif (100), de la vitesse mesurée en dernier lieu, de la masse du dispositif (100) et de son chargement et/ou de la répartition du chargement.

11. Dispositif mobile (100) selon l'une des revendications 8 à 10,
dans lequel le premier capteur optoélectronique basé sur une corrélation (12) est monté sur le bord du dispositif (100), en particulier dans une direction de circulation préférée ou en sens contraire, afin de reconnaître en temps utile des bordures de chute (54).

12. Procédé pour la mesure sans contact de positions, de trajets et/ou de vitesses, dans lequel on effectue un calcul à partir d'un premier signal de position en fonction du temps et d'un second signal de position en fonction du temps provenant de deux sources différentes (12, 14) pour donner assurément la position, le trajet et/ou la vitesse,
dans lequel le premier signal de position est déterminé à partir d'au moins deux images prises l'une après l'autre d'une première structure de surface (20) en particulier éclairée, au moyen d'une procédure de corrélation optique et/ou par évaluation du flux optique, dans lequel on effectue un calcul à partir du premier et du second signal de position pour donner assurément une valeur pour la position, le trajet et/ou la vitesse,
et on délivre un signal de coupure ou de freinage de sécurité si l'on reconnaît une valeur non fiable ou une valeur classée comme critique, pour laquelle le premier et le second signal de position diffèrent l'un de l'autre de plus d'un seuil de différence de position prédéterminé.

13. Procédé selon la revendication 12,
dans lequel le premier signal de position est déterminé à partir d'au moins deux images prises l'une après l'autre d'une seconde structure de surface, en particulier éclairée, différente de la première structure de surface (20), au moyen d'une procédure de corrélation optique et/ou par évaluation du flux optique, et dans lequel on calcule en particulier une position en rotation à partir des signaux de position.

14. Procédé selon la revendication 12 ou 13,
dans lequel un signal de coupure ou de freinage est délivré dans l'une au moins des situations suivantes : le premier et/ou le second signal de position ne sont pas fiables plus longtemps qu'un intervalle temporel maximum, la position quitte une zone permise (50) ou atteint une zone non permise (52), ou la vitesse tombe à l'extérieur d'un intervalle de vitesses de consigne, et dans lequel l'intervalle temporel maximum, le seuil de différence de position, les zones permises (50), les zones non permises (52) et/ou l'intervalle de vitesses de consigne sont fonction de la vitesse mesurée en dernier lieu.

15. Procédé pour effectuer une navigation sûre d'un dispositif mobile (100), en particulier d'un véhicule sans conducteur ou avec conducteur, par détermination d'une position, d'un trajet et/ou d'une vitesse avec un procédé selon l'une des revendications 12 à 14.
